# EUROPÄISCHE PATENTSCHRIFT

(11) **EP 1 894 469 B1**
(45) Veröffentlichungstag und Bekanntmachung des Hinweises auf die Patenterteilung: **02.03.2011**
(21) Anmeldenummer: 06119958.4
(22) Anmeldetag: 01.09.2006
(51) Int. Cl.: A01M 23/36

(54) **Tierfalle**
Animal trap
Piège pour animaux

(43) Veröffentlichungstag der Anmeldung: 05.03.2008
(73) Patentinhaber: Swissinno Solutions AG, 9000 St. Gallen (CH)
(72) Erfinder: Le Laidier, Gabriel, 9000 St. Gallen (CH); Walstad, Dennis, Elburn 60119 (US); Couvreur, John, Naperville 60540 (US)
(74) Vertreter: Wenger, René

(56) Entgegenhaltungen:
- WO-A-03/061375
- FR-A1- 2 598 060
- FR-A1- 2 790 640
- GB-A- 183 725
- US-A- 964 877
- US-A- 4 494 335

## Beschreibung

Die Erfindung betrifft eine Tierfalle gemäss dem Oberbegriff von Anspruch 1. Derartige Tierfallen dienen zum Fangen von in unterirdischen Gängen sich aufhaltenden Tieren, insbesondere zum Fangen von Wühlmäusen wie beispielsweise Schermäusen oder auch Feldmäusen.

Tierfallen, mit welchen im Boden lebende Wühlmäuse gefangen werden können, sind seit längerer Zeit bekannt und gebräuchlich. Eine gattungsmässig vergleichbare Tierfalle beschreibt beispielsweise die WO 03/061375. Die dort gezeigte Tierfalle weist ein rohrförmiges Gehäuse auf, das bodenseitig zwei in einem Gang einsetzbare Öffnungen aufweist. In diesem Gehäuse ist ein ebenfalls rohrförmiges (bzw. hohlzylindrisches) Schliesselement angeordnet, das längs verschiebbar im Gehäuse gelagert ist und in Schliessstellung die Öffnungen versperrt. Zum Stellen muss die Tierfalle in einen Wühlmausgang platziert werden, so dass der Gang durch die Öffnungen zum Durchlassen der Maus freigegeben ist. Im Bereich des Bodens der Falle ist eine Auslöserstange angeordnet, die drehbar über eine sich in Längsrichtung erstreckende Auslöserachse im Gehäuse gelagert ist. Die Auslöserachse weist auf der der Auslöserstange gegenüber liegenden Seite ein U-förmiges Ende auf, dessen Spitze in der Offenstellung der Falle eine mit dem Schliessteil verbundene Wippe niederhält. Die Wippe ist schwenkbar mit einem dem Schliessteil zugeordneten Ladegriff verbunden. Zum Spannen der Falle (d.h. in Offenstellung bringen) muss der Spannhebel mit der Wippe zuerst hochgezogen werden, die Wippe wird dann gegen den Gehäusedeckel gedrückt, und schliesslich muss die Spitze des U-förmigen Endes des Auslösers auf die Wippe platziert werden, wodurch das Schliessteil in Offenstellung gehalten ist. Diese Tierfalle ist schwierig in der Handhabung. Im Weiteren hat sich in der Praxis gezeigt, dass die Verwendung von Spiraldruckfedern zum Erzeugen einer Vorspannung für das Schliessteil ungünstig sein kann.

Aus der US 964,877 ist eine Falle zum überirdischen Fangen von Tieren bekannt geworden. Die Falle verfügt über eine U-förmige Anordnung mit zwei Armen, die in das Erdreich eingesteckt werden können. Zwischen den Armen ist zum Töten des Tiers ein Messer in Form eines Dreizacks angeordnet, welches über eine Schraubendruckfeder in einer Offenstellung vorspannbar ist. Zum Halten der Offenstellung ist ein am oberen Ende befestigter Keil vorgesehen, der beim Heraufziehen des Messers in die Offenstellung mit diesem verrastet.

Die FR 2 598 060 zeigt eine Tierfalle mit einem hin und her bewegbaren Teil mit einer Vielzahl von Spiessen, welches durch Schenkelfedern in einer Offenstellung gehalten werden kann. Für ein selbstständiges Blockieren bei Erstellen der Offenstellung ist ein einfacher Klinkenmechanismus vorgesehen.

In der GB 183,725 ist eine Tierfalle zum Fangen von in unterirdischen Gängen sich aufhaltenden Tieren beschrieben. Die Falle ist als Drahtfalle ausgestaltet, die in die Erde eingegraben wird.

Die US 4,494,335 betrifft eine Maulwurffalle, bei der die Auslösung der Falle durch Erheben des Erdreichs beim Durchgang des Tiers erfolgt. Nach Auslösen der Falle wird der Maulwurf aufgespiesst. Ebenfalls eine Maulwurffalle betrifft die FR 2 790 640.

Es ist deshalb eine Aufgabe der vorliegenden Erfindung, die Nachteile des Bekannten zu vermeiden, insbesondere eine Tierfalle der eingangs genannten Art zu schaffen, die sich durch eine einfache Handhabung auszeichnet.

Diese Aufgabe wird erfindungsgemäss mit einer Tierfalle gelöst, die die Merkmale im Anspruch 1 aufweist. Das Schliessteil ist derart von der Schliessstellung in die Offenstellung bewegbar, dass bei Erreichen der Offenstellung das Schliessteil mit Hilfe der mit dem Auslösemechanismus in Wirkverbindung stehenden Festhalteanordnung selbstständig blockierbar ist. Zum Stellen der Falle muss damit nur das Schliessteil bewegt werden, die Blockierung erfolgt automatisch ohne dass weiter Massnahmen ergriffen werden müssen. Durch die selbstständige Blockierbarkeit ist damit eine einfache Handhabung der Tierfalle gewährleistet. Das Bewegen des Schliessteils erfolgt dabei vorzugsweise durch Verschieben. Beim Schliessen der Falle erhält das Tier von der vorderen Kante einen Schlag, welcher im Idealfall tödlich ist. Je nach zu fangenden Tieren wird zum Schaffen der Federvorspannung eine entsprechende Federanordnung vorgesehen, mit welcher eine ausreichende Schliesskraft erzeugbar ist.

In einer ersten Ausführungsform kann das Schliessteil durch eine Rastverbindung im Gehäuse in der Offenstellung blockierbar sein. Mit einer solchen Festhalteanordnung kann die selbstständige Blockierbarkeit auf besonders einfache Art und Weise erreicht werden.

Die Festhalteanordnung kann wenigstens ein am Schliessteil angebrachtes Sperrglied aufweisen, das in der Offenstellung an einer Stützschulter des Auslösemechanismus abstützbar ist. Mit einer derartigen Anordnung lässt sich besonders einfach eine vorteilhafte Verriegelung des Schliessteils in der Offenstellung erreichen.

Vorteilhaft kann es sein, wenn der Auslösemechanismus ein schwenkbar im Gehäuse gelagertes Auslöseteil enthält, dessen Schwenkachse quer, vorzugsweise etwa im rechten Winkel, zur Bewegungsrichtung des Schliessteils verläuft. Das Auslöseteil kann ein sich in Bewegungsrichtung erstreckendes Bauteil sein. Ein Tier kann somit bei Berührung des vorderen Endes dieses Teils auf besonders einfache Art und Weise eine Schwenkbewegung und damit ein zuverlässiges Auslösen der Tierfalle bewirken. Diese Anordnung stellt sicher, dass beispielsweise ein Überspringen von Teilen des Auslösemechanismus - wie beispielsweise bei Verwendung einer Auslöserstange wie bei der WO 03/061375 - nicht möglich ist. Ein Nichtauslösen ist somit praktisch ausgeschlossen.

Besonders vorteilhaft kann es sein, wenn der Auslösemechanismus ein Auslöseteil mit wenigstens einer Auflaufflanke enthält, an der das Sperrglied bei der Öffnungsbewegung entlang fahrbar ist. Auf diese Art und Weise kann beim Bewegen, insbesondere beim Verschieben des Schliessteils in Offenstellung, das Auslöseteil geschwenkt werden.

Der Auslösemechanismus kann ein mit Stützgliedern versehenes Auslöseteil aufweisen, wobei das bezogen auf die Öffnungsrichtung obere Ende des Stützglieds die Stützschulter bildet.

Besonders vorteilhaft kann es sein, wenn das Auslöseteil ein aus zwei in einem Abstand angeordneten Stützgliedern bestehendes Stützelement enthält. Dabei kann zwischen den Stützgliedern ein Führungskanal ausgebildet sein, in dem das Sperrglied durchführbar ist. Dem Führungskanal kann weiterhin ein in Öffnungsrichtung sich öffnender, vorzugsweise keilförmiger Einführabschnitt vorgelagert sein. Diese Anordnung gewährleistet ein vorteilhaftes Zusammenwirken zwischen Sperrglied und dem Stützelement.

Die Stützglieder können ein in Öffnungsrichtung gepfeiltes Stützelement formen, wobei dessen Pfeilflächen äussere Auflaufflanken bilden können. Somit kann das Sperrglied aussen an den Pfeilflächen und innen durch den Führungskanal bei der Öffnungsbewegung fahrbar sein.

Das Schliessteil weist ein aus dem Gehäuse ragendes Griffstück auf, mit dessen Hilfe das Schliessteil in die Offenstellung bringbar ist. Auf diese Weise lässt sich leicht durch manuelles Ergreifen des Griffstücks die Öffnungsbewegung bewirken. In Offenstellung und in Schliessstellung kann das Griffstück verschieden weit aus dem Gehäuse ragen. Somit lässt sich einfach erkennen, ob die Tierfalle ausgelöst worden ist oder nicht. Beispielsweise würde also ein weit aus dem Gehäuse ragendes Griffstück (Schliessteil in Offenstellung) anzeigen, dass noch kein Tier gefangen wurde. Die Signalwirkung könnte durch die Verwendung von Farben am Griffstück weiter verstärkt werden.

Das Schliessteil kann einstückig und vorzugsweise als Spritzgussteil aus Kunststoff ausgebildet sein. Ein solches Schliessteil lässt sich einfach und kostengünstig herstellen.

Besonders vorteilhaft ist es , dass zum Aufbringen der Federvorspannung wenigstens eine Schenkelfeder vorgesehen ist. Eine Schenkelfeder ist infolge einer nichtlinearen Federkraftverteilung während des Schliess- und Öffnungsvorgangs hinsichtlich Handhabung und Fangeffizienz vorteilhaft.

Besonders vorteilhaft ist es, dass auf gegenüberliegenden Seiten des Auslöseteils jeweils eine Schenkelfeder vorgesehen ist. Mit Hilfe einer solchen Anordnung kann eine einseitige Federkraftbeaufschlagung vermieden werden.

Für die Abstützung der Schenkelfeder ist jeweils ein Federlager am Auslöseteil vorgesehen, wobei die Federlager des Schenkelfederpaars versetzt oder nicht versetzt zueinander angeordnet sein können.

Die Kante kann durch ein vorderes Ende eines Wandabschnitts gebildet sein, mit dem die Öffnung in Schliessstellung versperrbar ist. Da zum Fangerfolg in der Regel das Tier Erschlagen werden muss, könnte statt eines solchen Wandabschnitts auch nur ein vergleichsweise kurzer Kantenabschnitt gewählt werden, der die Öffnung nicht oder nur teilweise versperren würde.

Das Gehäuse kann zwei Öffnungen aufweisen, die vorzugsweise einander gegenüberliegen. Weiter ist der Wandabschnitt hohlzylindrisch ausgebildet, wodurch beide Öffnungen in Schliessstellung versperrbar sind. Das Schliessteil muss selbstverständlich jedoch nicht vollständig hohlzylindrisch ausgebildet sein. Stattdessen ist es vorteilhaft, dass nur das vordere Ende für den Wandabschnitt hohlzylindrisch ausgebildet ist und dass an den Hohlzylinder beispielsweise ein sich in Bewegungsrichtung (z. B. Öffnungsrichtung) erstreckender Verbindungsabschnitt anschliesst, dessen oberes Ende durch das Griffstück gebildet ist. Der Verbindungsabschnitt kann beispielsweise ein Flachprofil mit einem in etwa rechteckigen Querschnitt sein. Es könnten aber auch andere Profilformen gewählt werden.

Für eine sichere Tötung des Tiers kann es vorteilhaft sein, wenn die Kante des Schliessteils im Querschnitt keilförmig ausgebildet ist. Dies kann insbesondere dann vorteilhaft sein, wenn die Kante im Querschnitt verhältnismässig dick wäre bzw. eine grosse Wandstärke aufweisen würde. In der Regel sollte der Keil jedoch nicht in eine scharfe Spitze zulaufen, da normalerweise keine schneidenden Eigenschaften erwünscht sind. Denn ein Abtrennen von Körperteilen des Tiers wäre aus hygienischen Gründen ungünstig.

Am Boden der Öffnung kann ein vorzugsweise ringförmiger Bodenabschnitt vorgesehen sein, der wenigstens in der Schliessstellung gegenüber der Kante des Schliesselements nach innen versetzt angeordnet sein kann, wobei vorzugsweise die Kante den Bodenabschnitt wenigstens teilweise überlappen kann. Zusätzlich wäre es auch hier vorstellbar, wenn das dem Schliessteil zugewandte vordere Ende des Bodenabschnitts im Querschnitt keilförmig ausgebildet wäre.

Das Gehäuse ist wenigstens bodenseitig hohlzylindrisch ausgebildet. Weist das Gehäuse einen zylindrischen Gehäusemantel auf, dann kann der Bodenabschnitt in einer Draufsicht derart gegenüber dem Gehäusemantel nach innen versetzt sein, dass die Kante in der Draufsicht zwischen dem Gehäusemantel und dem Bodenabschnitt liegt.

Herstellungsmässig und aus Kostengründen kann es vorteilhaft sein, wenn das Gehäuse und/oder das Schliessteil aus Kunststoff besteht.

Weitere Vorteile und Einzelmerkmale der Erfindung ergeben sich aus den Zeichnungen und aus der nachfolgenden Beschreibung von Ausführungsbeispielen. Es zeigen:
- Figur 1: eine perspektivische Darstellung einer erfindungsgemässen Tierfalle, die zum Fangen von Wühlmäusen im Boden eingestellt ist,
- Figur 2: eine Darstellung der Tierfalle gemäss Figur 1 in Offenstellung aus einem anderen Blickwinkel,
- Figur 3: die Tierfalle gemäss Figur 2 in Schliessstellung,
- Figur 4: die Tierfalle gemäss Figur 2 mit demontiertem Gehäuseschalenteil,
- Figur 5: die Tierfalle gemäss Figur 3 mit demontiertem Gehäuseschalenteil,
- Figur 6: eine perspektivische Darstellung eines Auslöseteils und eines Schenkelfederpaars für die Tierfalle,
- Figur 7: eine perspektivische Darstellung eines Schliessteils für die Tierfalle,
- Figur 8: eine Seitenansicht eines gegenüber Figur 7 leicht modifizierten Schliessteils,
- Figur 9: eine Vorderansicht des Schliessteils gemäss Figur 8 mit einem Teilschnitt (Schnitt A-A gemäss Figur 8),
- Figur 10: einen Längsschnitt durch die Tierfalle (Schnitt B-B gemäss Figur 9),
- Figur 11: eine Vorderansicht des Auslöseteils gemäss Figur 6, und
- Figur 12: eine Seitenansicht des Schliessteils gemäss Figur 11.

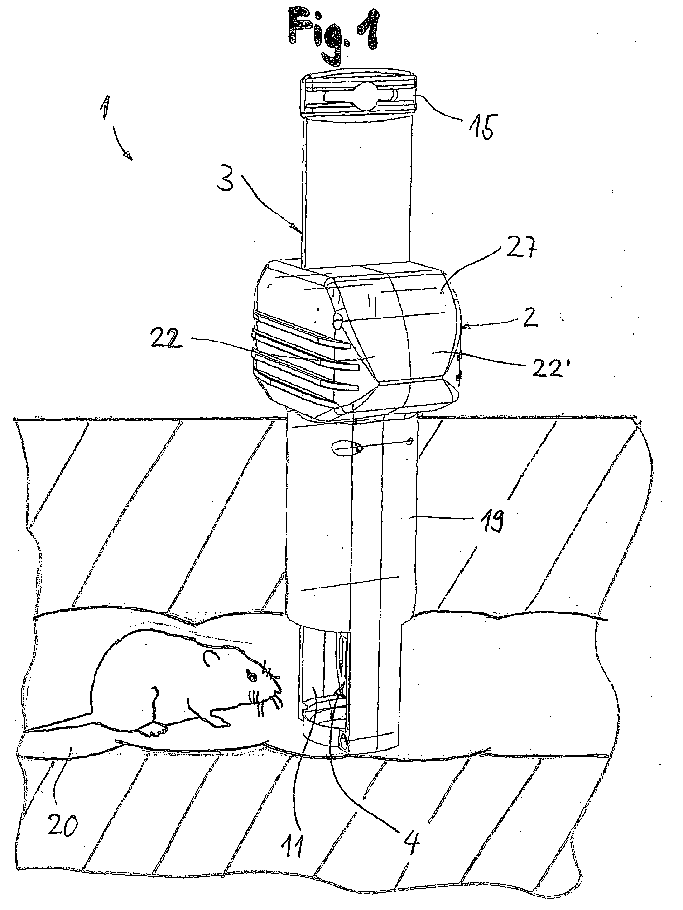

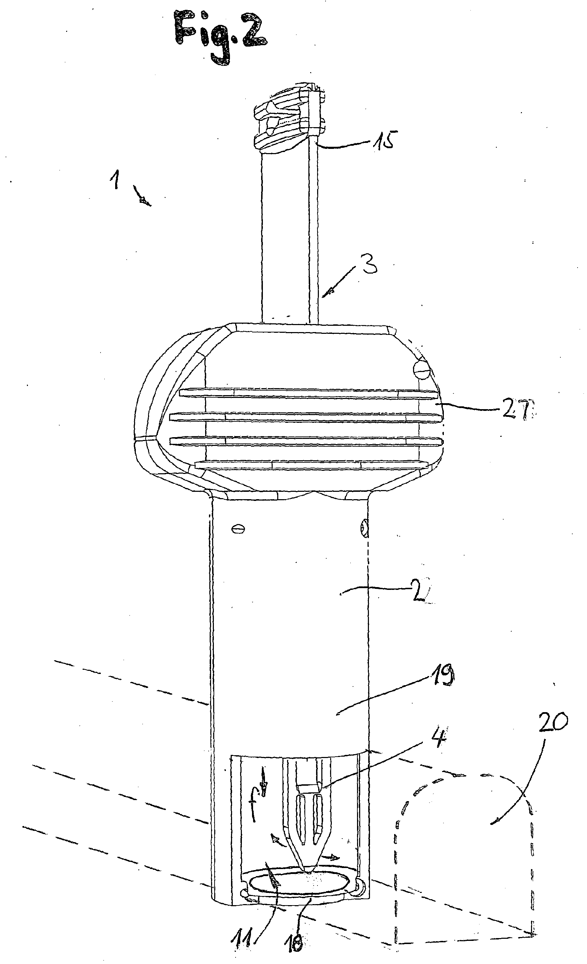

Figur 1 zeigt eine mit 1 bezeichnete Tierfalle, die unter feldmässigen Bedingungen gestellt ist. Die gestellte Tierfalle weist ein mit Öffnungen 11 versehenen Gehäuse 2 auf, wobei sie derart in einen unterirdischen Gang 20 eingesetzt ist, dass der Gang durch die Öffnung freigegeben ist. Solche Gänge werden beispielsweise von Wühlmäusen benutzt. Grundsätzlich würde sich die erfindungsgemässe Tierfalle aber auch zum Fangen anderer Tiere eignen. Aus Figur 1 ist weiterhin erkennbar, dass das Gehäuse zweiteilig ausgebildet ist und aus Gehäuseschalenteilen 22 und 22' besteht. Das Gehäuse weist bodenseitig ein durch den Gehäusemantel 19 vorgegebenes zylindrisches Teil und oberirdisch ein Kopfteil 27 auf. Die genaue Wirkungsweise der Tierfalle ist anhand der nachfolgenden Figuren 2 bis 5 im Detail erläutert.

Wie aus Figur 2 hervorgeht, sind bodenseitig im zylindrischen Teil 19 des Gehäuses einander gegenüberliegende Öffnungen 11 angeordnet. In den Gang 20 ragt ersichtlicherweise ein vorderes Ende eines Auslöseteils 4, das bei Berührung durch das zu fangende Tier eine Schliessbewegung eines Schliessteils 3 in f-Richtung auslösen würde. Das Schliessteil 3 ist in der Schliessrichtung f verschiebbar im Gehäuse gelagert. Das Auslöseteil 4 ist schwenkbar im Gehäuse gelagert, die Schwenkrichtungen sind mit gekrümmten Pfeilen angedeutet. Vom Schliessteil 3 ist in Figur 2 aber lediglich ein aus dem Gehäuse 2 ragendes Griffstück 15 erkennbar.

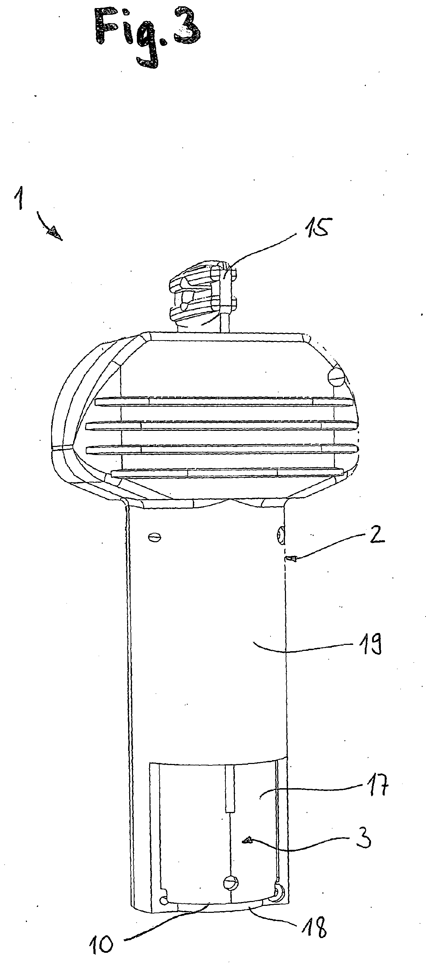

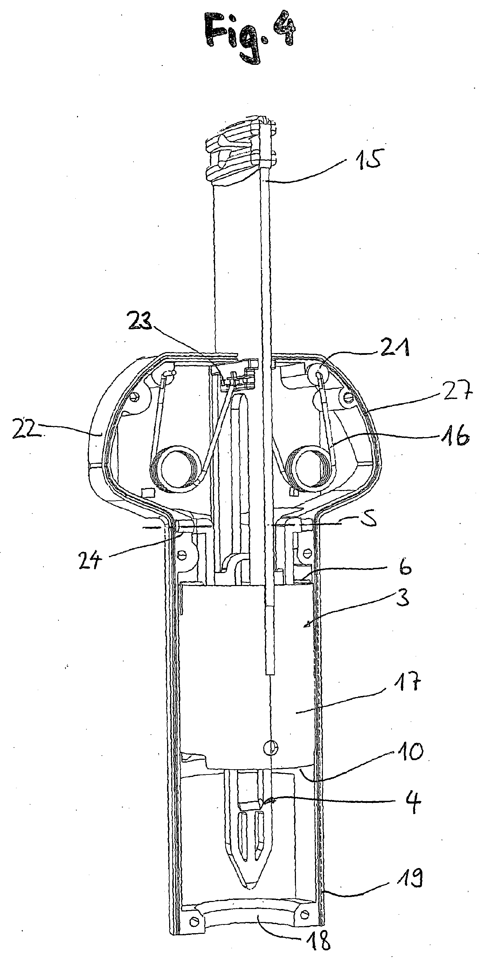

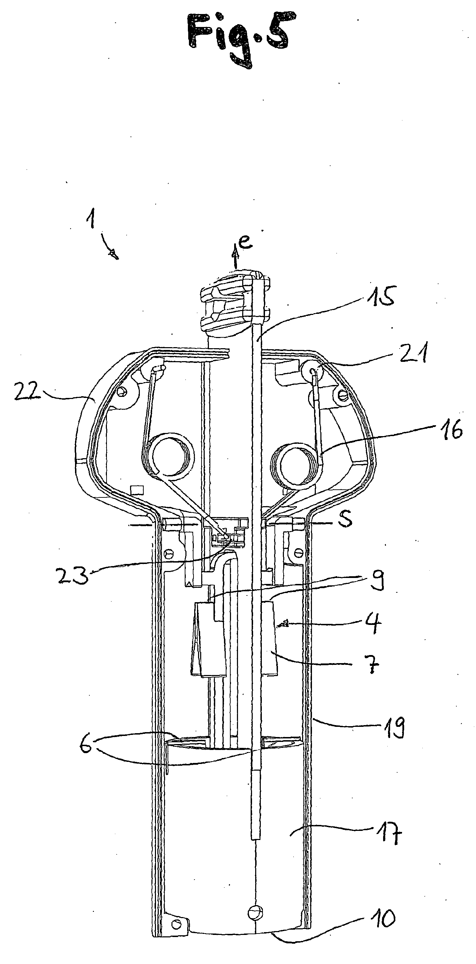

Figur 3 zeigt die Tierfalle 1 nach dem Auslösen durch ein Tier. In Schliessstellung versperrt ersichtlicherweise ein Wandabschnitt 17 des Schliessteils 3 die Öffnungen. Das Schliessteil 3 weist eine vordere Kante 10 auf, die bei der Schliessbewegung eine Schliesskraft auf das Tier ausübt. Dabei wird dem Tier ein bevorzugt tödlicher Schlag versetzt. Um die Schliesskraft zu aufzubringen, ist in der Tierfalle eine Federanordnung (vgl. Fig. 4 und 5) vorgesehen.

Am Boden der Öffnung 11 ist ein ringförmiger Bodenabschnitt 18 vorgesehen. Anhand der Figuren 2 und 3 ist erkennbar, dass der Bodenabschnitt 18 in der Schliessstellung gegenüber der Kante 10 nach innen versetzt angeordnet ist, wobei die Kante 19 den Bodenabschnitt 18 teilweise überlappt. Der Bodenabschnitt 18 ist in einer (nicht dargestellten) Draufsicht also derart gegenüber dem Gehäusemantel 19 nach innen versetzt, dass die Kante 10 in der Draufsicht zwischen dem Gehäusemantel 19 und dem Bodenabschnitt 18 liegt.

Die Federanordnung ist in Figur 4 sowie 5 erkennbar. Im vorliegenden Ausführungsbeispiel besteht die Federanordnung aus einem Schenkelfederpaar mit zwei Schenkelfedern 16. Die Schenkelfeder 16 ist jeweils über ein Lager 21 am Gehäuse 2 und über ein Lager 23 am Schliessteil 3 abgestützt. Das Schliessteil 3 ist auf diese Weise unter Federvorspannung durch eine Festhalteanordnung in der Offenstellung gehalten.

Das Gehäuse 2 besteht aus zwei Gehäusehälften, die in Längsrichtung teilbar sind. Ein einzelnes Gehäuseschalenteil 22 ist in den Figuren 3 und 4 erkennbar. Hier sind weiterhin Befestigungslöcher erkennbar, die zum Verbinden der Gehäuseschalenteile miteinander dienen. Zur Aufnahme der Schenkelfedern dient das diese umgebende Kopfteil 27 des Gehäuses. Figur 4 zeigt weiterhin, dass das dem Schliessteil zugewandte vordere Ende des Bodenabschnitts 18 im Querschnitt keilförmig ausgebildet ist.

Das Auslöseteil 4 ist - wie Figur 4 zeigt - schwenkbar über eine Schwenkachse S im Gehäuse gelagert. Die Schwenkachse S verläuft dabei ersichtlicherweise im rechten Winkel quer zur Bewegungsrichtung des Schliessteils 3. Für die Schwenkbewegung sind Achsstummel 24 vorgesehen, die in korrespondierenden Gelenkpfannen des Gehäuses aufnehmbar sind.

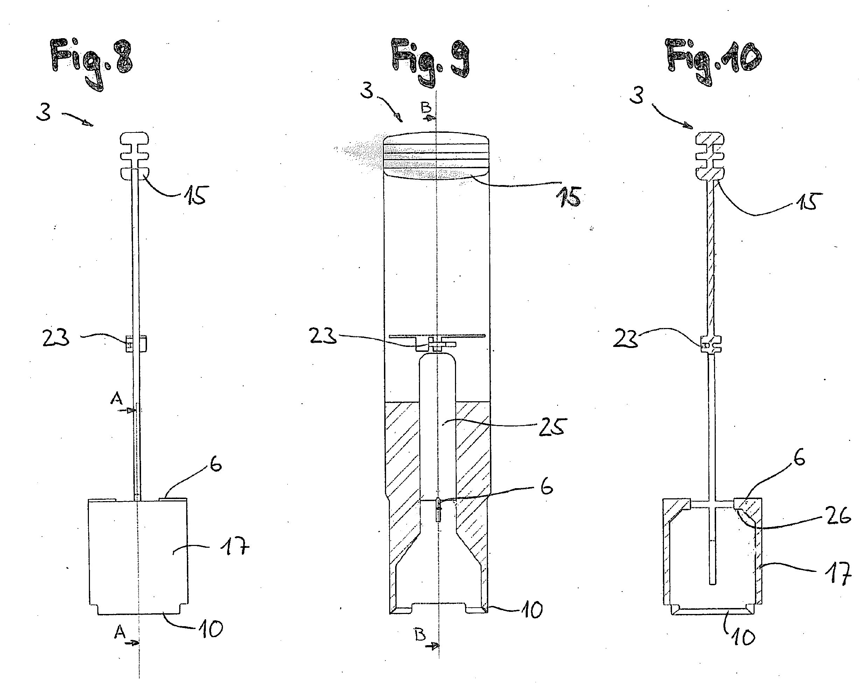

In der Schliessstellung der Tierfalle 1 gemäss Figur 5 sind einige konstruktive Details der Festhalteanordnung zum Festhalten des Schliessteils in der Offenstellung erkennbar. Am Auslöseteil 4 sind auf zwei einander gegenüberliegenden Seiten Stützelemente 7 angeordnet. Am oberen Ende der Stützelemente 7 sind Stützschultern 9 erkennbar, an welchen sich mit 6 bezeichnete Sperrglieder 6 des Schliessteils 3 in Offenstellung abstützen können (vgl. nachfolgende Figuren 9/10). In Figur 4 sind die Sperrglieder 6 nur teilweise erkennbar, da sie weitgehend durch den Wandabschnitt 17 verdeckt sind. Das Auslöseteil 4 enthält den Stützelementen 7 zugeordnete Auflaufflanken, an der das Sperrglied 6 bei der Öffnungsbewegung entlang fahrbar ist.

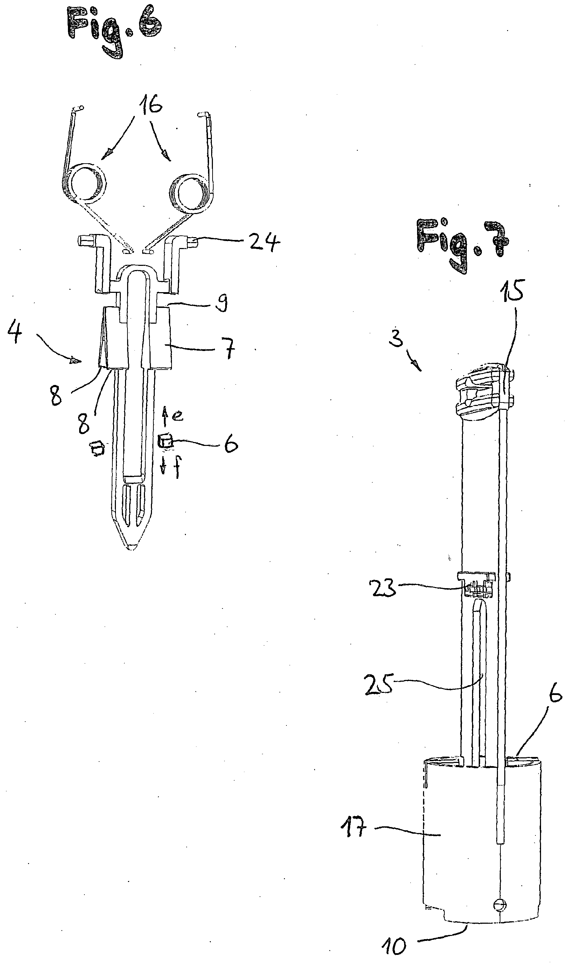

Wie insbesondere aus Figur 6 hervorgeht, besteht ein Stützelement jeweils aus zwei Stützgliedern 8. Das bezogen auf die Öffnungsrichtung obere Ende eines Stützglieds 8 bildet jeweils eine Stützschulter 9. Bei der mit einem Pfeil e angedeuteten Öffnungsbewegung würde das Sperrglied 6 an zwischen den Stützgliedern 8 befindlichen Auflaufflanken entlang fahren. Bei Erreichen der Offenstellung dienen die Stützschultern 9 als Anschläge. In dieser Position wäre das Schliessteil durch eine Rastverbindung blockiert.

Figur 6 zeigt weiterhin die Schenkelfedern 16 in Schliessstellung. Die Enden der Schenkelfedern 16 sind derart abgewinkelt, dass diese etwa parallel zur Schwenkebene des Auslöseteils verlaufen. Ein derart abgewinkeltes Federende liegt vorteilhaft am Schliessteil 3 an (vgl. Figur 7).

In Figur 7 ist das ausgebaute Schliessteil 3 gezeigt. Das Schliessteil 3 weist einen hohlzylindrischen Wandabschnitt 17 auf, der das bodenseitige Ende des Schliessteils bildet. An diesem schliesst ein sich in Öffnungsrichtung erstreckendes Flachprofil an, dessen Ende durch das Griffstück 15 gebildet ist. Etwa mittig ist das Federlager 23 erkennbar, worin anliegend ein abgewinkeltes Ende der vorgängig beschriebenen Schenkelfeder aufnehmbar ist. Zwischen dem Wandabschnitt 17 und dem Federlager 23 ist ein Langloch 25 vorgesehen, das zwei Arme bildet. In der Aussparung 25 bzw. zwischen den Armen ist das Auslöseteil derart aufgenommen, dass wenigstens eine geringfügige Schwenkbewegung möglich ist. Das Schliessteil 3 kann einstückig und als Spritzgussteil aus Kunststoff ausgebildet sein.

Das Schliessteil 3 gemäss den Figuren 8 bis 10 unterscheidet sich vom vorhergehenden Ausführungsbeispiel lediglich durch ein modifiziertes Federlager 23 und ein verschieden geformtes Griffstück 15. Aus Figur 9 ist beispielsweise erkennbar, dass die Kante 10 des Schliessteils 3 keilförmig ausgebildet ist. Aus Figur 10 ist die Ausgestaltung des Sperrglieds 6 gut erkennbar. Das Sperrglied ist als vom hohlzylindrischen Wandabschnitt 17 nach innen gerichtetes Element ausgebildet, wobei es eine mit 26 bezeichnete Sperrflanke aufweist. Diese Sperrflanke 26 bildet eine Anschlagfläche für die Stützschulter in der Offenstellung.

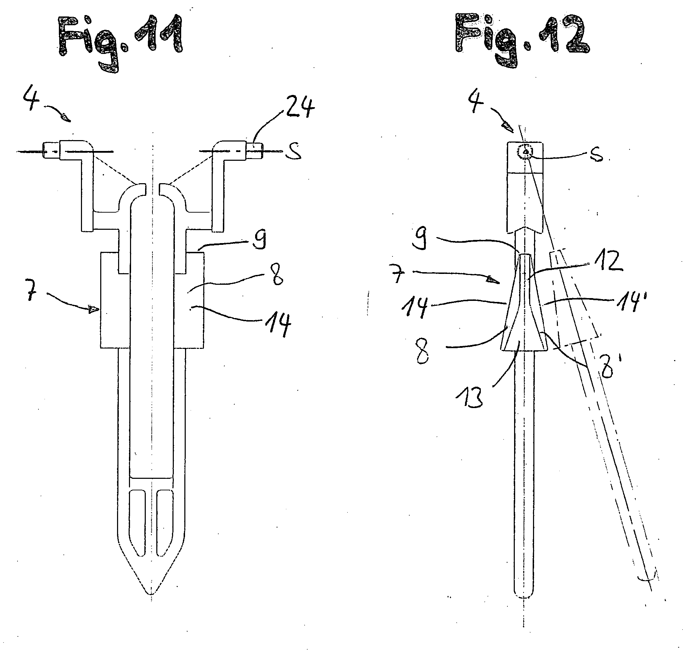

In Figuren 11 und 12 ist die genaue Ausgestaltung des Auslöseteils 4 erkennbar. Die Stützglieder 8, 8' formen ein in Öffnungsrichtung gepfeiltes Stützelement 7, wobei dessen Pfeilflächen 14 und 14' äussere Auflaufflanken bilden. Die zwei in einem Abstand angeordneten Stützglieder 8, 8' des Stützelements bilden den Führungskanal 12 aus, in dem das Sperrglied durchführbar ist. Diesem Führungskanal 12 ist ein in Öffnungsrichtung sich öffnender, vorzugsweise keilförmiger Einführabschnitt 13 vorgelagert. Das Stützelement 7 enthält damit aussen und innen Auflaufflanken (12, 13 bzw. 14), an der das Sperrglied bei der Öffnungsbewegung entlang fahrbar wäre. In der Offenstellung liegt ein (hier nicht dargestelltes) Sperrglied auf der Stützschulter 9 auf und verhindert damit die Verschiebung des Schliessteils zurück in die Schliessstellung. Bei der Auslösung wird das Auslöseteil 4 derart geschwenkt, dass das Sperrglied freigegeben ist und somit das Schliessteil selbständig unter Einwirkung der Federanordnung (i. e. Schenkelfedern) in die Schliessstellung verschoben wird. Das Auslöseteil in einer solchen Schwenkstellung ist in Fig. 12 mit gestrichelten Umrisslinien angedeutet.

## Patentansprüche

1. Tierfalle (1) zum Fangen von in unterirdischen Gängen sich aufhaltenden Tieren, insbesondere zum Fangen von Wühlmäusen, enthaltend
- ein Gehäuse (2), das wenigstens bodenseitig hohlzylindrisch ausgebildet ist und das wenigstens eine Öffnung aufweist, das derart in einen Gang (20) einsetzbar ist, dass der Gang durch die Öffnung wenigstens teilweise freigegeben ist,
- ein zwischen einer Schliessstellung und einer Offenstellung bewegbares Schliessteil (3), das einen hohlzylindrischen Wandabschnitt (17) aufweist, der das bodenseitige Ende des Schliessteils bildet mit einer vorderen Kante (10) zum Aufbringen einer vorzugsweise tödlichen Schliesskraft auf das Tier, wobei das Schliessteil (3) unter Federvorspannung durch eine Festhalteanordnung in Offenstellung haltbar ist,
- ein aus dem Gehäuse (2) ragendes Griffstück (15) am Schliessteil (3), mit dessen Hilfe das Schliessteil in die Offenstellung bringbar ist, und
- einen bei Betreten der Öffnung durch das Tier aktivierbaren Auslösemechanismus zum Auslösen der Schliessbewegung des Schliessteils (3),
**dadurch gekennzeichnet, dass**
- zum Aufbringen der Federvorspannung ein Schenkelfederpaar mit zwei Schenkelfedern (16) vorgesehen ist,
- dass das Gehäuse (2) ein die Schenkelfedern umgebendes Kopfteil (27) aufweist,
- dass das Griffstück (15) am oberen Ende eines sich an den hohlzylindrischen Wandabschnitt (17) des Schliessteils anschliessenden Verbindungsabschnitts angeordnet ist,
- und dass auf gegenüberliegenden Seiten des Verbindungsabschnitts je eine Schenkelfeder angeordnet ist, die sich über ein Lager (21) am Gehäuse (2) und über ein Lager (23) am Verbindungsabschnitt abstützt,
wobei das Schliessteil (3) derart von der Schliessstellung in die Offenstellung bewegbar ist, dass bei Erreichen der Offenstellung das Schliessteil (3) mit Hilfe der mit dem Auslösemechanismus in Wirkverbindung stehenden Festhalteanordnung selbstständig blockierbar ist.

2. Tierfalle nach Anspruch 1, **dadurch gekennzeichnet, dass** das Schliessteil (3) durch eine Rastverbindung im Gehäuse (2) in der Offenstellung blockierbar ist.

3. Tierfalle nach Anspruch 1 oder 2, **dadurch gekennzeichnet, dass** die Festhalteanordnung (5) wenigstens ein am Schliessteil (3) angebrachtes Sperrglied (6) aufweist, das in der Offenstellung an einer Stützschulter (9) des Auslösemechanismus abstützbar ist.

4. Tierfalle nach Anspruch 3, **dadurch gekennzeichnet, dass** der Auslösemechanismus ein schwenkbar im Gehäuse gelagertes Auslöseteil (4) enthält, wobei die Schwenkachse quer zur Bewegungsrichtung des Schliessteils (3) verläuft.

5. Tierfalle nach Anspruch 3 oder 4, **dadurch gekennzeichnet, dass** der Auslösemechanismus ein Auslöseteil (4) mit wenigstens einer Auflaufflanke (12, 13, 14) enthält, an der das Sperrglied (6) bei der Öffnungsbewegung und/oder Schliessbewegung entlang fahrbar ist.

6. Tierfalle nach einem der Ansprüche 1 bis 5, **dadurch gekennzeichnet, dass** das Schliessteil (3) einstückig und vorzugsweise als Spritzgussteil ausgebildet ist.

7. Tierfalle nach einem der Ansprüche 1 bis 6, **dadurch gekennzeichnet, dass** die Kante (10) des Schliessteils (3) im Querschnitt keilförmig ausgebildet ist.

8. Tierfalle nach einem der Ansprüche 1 bis 7, **dadurch gekennzeichnet, dass** am Boden der Öffnung (11) ein vorzugsweise ringförmiger Bodenabschnitt (18) vorgesehen ist, der wenigstens in der Schliessstellung gegenüber der Kante (10) des Schliesselements (3) nach innen versetzt angeordnet ist, wobei vorzugsweise die Kante (19) den Bodenabschnitt (18) wenigstens teilweise überlappt.

9. Tierfalle nach einem der Ansprüche 1 bis 8, **dadurch gekennzeichnet, dass** das Gehäuse (2) und/oder das Schliessteil (3) aus Kunststoff besteht.

## Claims

1. Animal trap (1) for catching animals living in underground tunnels, in particular for catching voles, comprising:
- a housing (2), which has a hollow-cylindrical form at least at the bottom, has at least one opening and can be inserted into a tunnel (20) in such a way that the tunnel is at least partly exposed by the opening,
- a closing part (3) which can be moved between a closed position and an open position and has a hollow-cylindrical wall section (17) which forms the bottom end of the closing part and has a front edge (10) for applying a preferably fatal closing force to the animal, wherein the closing part (3) can be held in the open position under spring prestressing by a securing arrangement,
- a grip part (15) on the closing part (3), said grip part (15) protruding out of the housing (2) and being used to bring the closing part into the open position, and
- a trigger mechanism, which can be activated by the animal when it enters the opening, for triggering the closing movement of the closing part (3),
**characterized**
- **in that** a pair of leg springs having two leg springs (16) is provided for applying the spring prestressing,
- **in that** the housing (2) has a top part (27) surrounding the leg springs,
- **in that** the grip part (15) is arranged at the upper end of a connecting section adjoining the hollow-cylindrical wall section (17) of the closing part,
- and **in that** a respective leg spring is arranged on opposite sides of the connecting section, said leg spring being supported on the housing (2) via a support (21) and on the connecting section via a support (23),
wherein the closing part (3) can be moved from the closed position into the open position such that on reaching the open position the closing part (3) can be blocked automatically with the aid of the securing arrangement, which is operatively connected to the trigger mechanism.

2. Animal trap according to Claim 1, **characterized in that** the closing part (3) can be blocked in the open position by a latching connection in the housing (2).

3. Animal trap according to Claim 1 or 2, **characterized in that** the securing arrangement (5) has at least one locking member (6) attached to the closing part (3), it being possible for said locking member (6) to be supported in the open position on a supporting shoulder (9) of the trigger mechanism.

4. Animal trap according to Claim 3, **characterized in that** the trigger mechanism comprises a trigger part (4) mounted in a pivotable manner in the housing, wherein the pivot axis extends transversely to the direction of movement of the closing part (3).

5. Animal trap according to Claim 3 or 4, **characterized in that** the trigger mechanism comprises a trigger part (4) having at least one run-on flank (12, 13, 14), along which the locking member (6) can travel during the opening and/or closing movement.

6. Animal trap according to one of Claims 1 to 5, **characterized in that** the closing part (3) is in one piece and preferably in the form of an injection-moulded part.

7. Animal trap according to one of Claims 1 to 6, **characterized in that** the edge (10) of the closing part (3) has wedge-like form in cross section.

8. Animal trap according to one of Claims 1 to 7, **characterized in that** a preferably annular bottom section (18) is provided at the bottom of the opening (11), said bottom section (18) being arranged, at least in the closed position, in an inwardly offset manner with respect to the edge (10) of the closing element (3), wherein preferably the edge (10) at least partially overlaps the bottom section (18).

9. Animal trap according to one of Claims 1 to 8, **characterized in that** the housing (2) and/or the closing part (3) consist(s) of plastics material.

## Revendications

1. Piège pour animaux (1) pour attraper des animaux vivant dans des galeries souterraines, notamment pour attraper des campagnols, contenant :
- un boîtier (2) prenant une forme de cylindre creux au moins du côté du sol et comportant au moins une ouverture, ledit boîtier pouvant être placé de telle sorte dans une galerie (20) que la galerie est libérée au moins en partie par l'ouverture ;
- une partie de fermeture (3) mobile entre une position fermée et une position ouverte qui comporte un segment de paroi (17) cylindrique creux qui forme l'extrémité du côté du sol de la partie de fermeture avec un bord avant (10) pour appliquer de préférence une force de fermeture mortelle sur l'animal, la partie de fermeture (3) pouvant être maintenue sous la précontrainte d'un ressort au moyen d'un dispositif d'attache en position ouverte ;
- un élément de poignée (15) saillant hors du boîtier (2) au niveau de la partie de fermeture (3) et avec l'aide duquel la partie de fermeture peut être amenée dans la position ouverte ; et
- un mécanisme de déclenchement pouvant être activé dès que l'animal franchit l'ouverture pour déclencher le mouvement de fermeture de la partie de fermeture (3) ;
**caractérisé en ce que** :
- pour appliquer la précontrainte d'un ressort, une paire de ressorts à branches dotée de deux ressorts à branches (16) est prévue :
- le boîtier (2) comporte une partie de tête (27) entourant les ressorts à branches ;
- l'élément de poignée (15) est disposé au niveau de l'extrémité supérieure d'un segment de liaison se raccordant au segment de paroi (17) cylindrique creux de la partie de fermeture ;
- et un ressort à branches est respectivement disposé sur le côté opposé du segment de liaison s'appuyant contre le boîtier (2) par l'intermédiaire d'un palier (21) et contre le segment de liaison par l'intermédiaire d'un palier (23) ;
la partie de fermeture (3) pouvant être déplacée de telle sorte que lorsqu'elle atteint la position ouverte, de la position fermée dans la position ouverte, la partie de fermeture (3) peut être bloquée de façon indépendante à l'aide du dispositif de fixation relié au mécanisme de déclenchement.

2. Piège pour animaux selon la revendication 1, **caractérisé en ce que** la partie de fermeture (3) peut être bloquée dans le boîtier (2) dans la position ouverte grâce à une liaison d'encliquetage.

3. Piège pour animaux selon la revendication 1 ou 2, **caractérisé en ce que** le dispositif de fixation (5) comporte au moins un élément bloquant (6) disposé au niveau de la partie de fermeture (3) qui peut s'appuyer dans la position ouverte contre un épaulement d'appui (9) du mécanisme de déclenchement.

4. Piège pour animaux selon la revendication 3, **caractérisé en ce que** le mécanisme de déclenchement contient une partie de déclenchement (4) disposée de façon pivotante dans le boîtier, l'axe de pivotement s'étendant transversalement par rapport à la direction de déplacement de la partie de fermeture (3).

5. Piège pour animaux selon la revendication 3 ou 4, **caractérisé en ce que** le mécanisme de déclenchement contient une partie de déclenchement (4) dotée d'au moins un côté obstrué (12, 13, 14) le long duquel l'élément bloquant (6) peut être amené lors du mouvement d'ouverture et/ou du mouvement de fermeture.

6. Piège pour animaux selon l'une quelconque des revendications 1 à 5, **caractérisé en ce que** la partie de fermeture (3) est réalisée d'un seul tenant et de préférence sous la forme d'une pièce moulée par injection.

7. Piège pour animaux selon l'une quelconque des revendications 1 à 6, **caractérisé en ce que** le bord (10) de la partie de fermeture (3) est réalisé en forme de coin en section transversale.

8. Piège pour animaux selon l'une quelconque des revendications 1 à 7, **caractérisé en ce qu'**un segment de plancher (18), de préférence de forme annulaire, est prévu au niveau du plancher de l'ouverture (11), ledit segment étant disposé de façon décalée vers l'intérieur par rapport au bord (10) de l'élément de fermeture (3) au moins dans la position fermée, le bord (19) chevauchant de préférence au moins en partie le segment de plancher (18).

9. Piège pour animaux selon l'une quelconque des revendications 1 à 8, **caractérisé en ce que** le boîtier (2) et/ou la partie de fermeture (3) sont en matière plastique.
